(19) Europäisches Patentamt
European Patent Office
Office européen des brevets

(11) **EP 3 115 900 A1**

(12) **EUROPEAN PATENT APPLICATION**

(43) Date of publication:
**11.01.2017 Bulletin 2017/02**

(51) Int Cl.:
**G06F 11/18** (2006.01)

(21) Application number: **15461546.2**

(22) Date of filing: **06.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Akademia Gorniczo-Hutnicza im. Stanislawa Staszica w Krakowie 30-059 Krakow (PL)**

(72) Inventor: **Kolek, Krzysztof 30-150 Krakow (PL)**

(74) Representative: **Eupatent.pl ul. Zeligowskiego 3/5 90-752 Lodz (PL)**

(54) **A COMPUTER SYSTEM AND A METHOD FOR EXECUTING SAFETY-CRITICAL APPLICATIONS USING VOTING**

(57)   A method for executing safety-critical applications, the method comprising the steps of: providing (501) a fixed-hardware processor (101) implementing a safety critical algorithm as well as a reconfigurable circuit (103) suitable for implementing the same algorithm; providing a software implementation of the same algorithm such that it may be run as a soft-processor manner in the reconfigurable circuit (103); providing (502) a voting module (206) configured to implement at least one voting strategy taking into account results obtained from executing the fixed-hardware implementation of the algorithm as well as from executing the soft-processor implementation of the algorithm; providing a watchdog identifying runs of the algorithm that exceed predefined timing parameters wherein output of the watchdog is provided to the voting module (206); configuring the reconfigurable circuit (103) with the software implementation in order to create the soft-processor; monitoring (504) at least one input signal for the purpose of detection of an event by said fixed-hardware algorithm and said soft-processor algorithm whereas when detected, such event is processed in order to signal appropriate reaction to the event based on the output of the voting module (206).

Fig. 1

## Description

TECHNICAL FIELD

The present invention relates to architecture of a system for safety-critical applications. In particular, the present invention relates to raising the reliability level of a computer system that detects events leading to safety problems.

BACKGROUND

Presently, three main architecture features are used in safety-critical systems: redundancy, multiplicity and diversity. Redundancy means a usage of a plurality of identical devices in order to increase reliability of the system. Multiplicity focuses on a usage of multiple detection paths (as well as a usage of multiple actuator paths and multiple detection devices). Diversity focuses on a usage of different types of devices leading to a reduction of a probability of wrong operation due to a common error in multiple or redundant devices.

A PCT application WO2012116654 discloses a prototype verification system and verification method for a high-end fault-tolerant computer. The system comprises a plurality of single-node prototype verification systems and an interconnection router chipset. The single-node prototype verification systems are interconnected by means of the interconnection router chipset. Each single-node prototype verification system comprises a four-path tightly-coupled CPU board and a chip verification board comprising two node-controller chipsets. Each node-controller chipset comprises: two field-programmable gate array (FPGA) chips, together bearing the logic of one node controller; and an interconnection board comprising two FGPA chips. Each FPGA chip provides with a high-speed interconnection port used to achieve protocol interconnectivity between two paths on the CPU board and one of the node-controller chipsets. On the basis of ensuring system performance and reliability, the system enhances protocol verification coverage of the interconnected chipsets in the system and reduces project verification overhead.

A US patent US5031180 discloses a fault tolerant register employing triple redundant storage of data and continuous voting to protect the data from Single Event Upset, or SEU. The fault tolerant register includes a single master multiplexer, three slave multiplexers connected in parallel to the output of the master multiplexer and three voting circuits positioned in feedback paths of the slave multiplexers. The slave multiplexers provide triple redundant storage for the data and the voting circuits correct any data that might become disrupted. The fault tolerant register of the present invention provides greatly improved SEU tolerance without a large increase in circuit area or without resorting to error correction and its attendant scrubbing process.

There is a need to extend the diversity feature to the implementation of the same functions as direct connection of hardware resources.

The quantitative values usually applied to describe the safety systems are average probability of failure on demand (PFD) and probability of dangerous failure pew hour (PFH). They are defined in the IEC 61508 standard. The architectures of the safety systems are marked as e.g. 1oo1, 1oo2, 1oo3, 2oo2, 2oo3, 1oo2D depending on the number of calculating paths and acting devices.

SUMMARY OF THE INVENTION

The object of the invention is a method for executing safety-critical applications, the method comprising the steps of: providing a fixed-hardware processor implementing a safety critical algorithm as well as a reconfigurable circuit suitable for implementing the same algorithm; providing a software implementation of the same algorithm such that it may be run as a soft-processor manner in the reconfigurable circuit; providing a voting module configured to implement at least one voting strategy taking into account results obtained from executing the fixed-hardware implementation of the algorithm as well as from executing the soft-processor implementation of the algorithm; providing a watchdog identifying runs of the algorithm that exceed predefined timing parameters wherein output of the watchdog is provided to the voting module; configuring the reconfigurable circuit with the software implementation in order to create the soft-processor; monitoring at least one input signal for the purpose of detection of an event by said fixed-hardware algorithm and said soft-processor algorithm whereas when detected, such event is processed in order to signal appropriate reaction to the event based on the output of the voting module.

Preferably, more than one fixed-hardware processors implementing a safety critical algorithm operate in parallel and are monitored by the watchdog and the voting module.

Preferably, the configuration of the voting module may be updated in case the number of fixed-hardware processors, operating in parallel, changes. Preferably, the reconfigurable circuit is a field-programmable gate array (FPGA) or an application specific integrated circuit (ASIC).

Another object of the invention is a system for executing safety-critical applications, the system comprising: at least one hardware processor and at least one reconfigurable circuit configured to read input data and to output processing results; wherein the at least one hardware processor implements a safety critical algorithm; wherein the at least one reconfigurable circuit implements the same safety critical algorithm as a soft-processor; a voting module configured to implement at least one voting strategy taking into account results obtained from executing the algorithm by the at least one hardware processor as well as from executing the soft-processor implementation of the algorithm; wherein, based on the voting strategy, the voting module is configured to signal normal or abnormal event related to the input data; providing a watchdog identifying runs of the algorithm that exceed predefined timing parameters wherein output of the watchdog is provided to the voting module.

BRIEF DESCRIPTION OF DRAWINGS

These and other objects of the invention presented herein, are accomplished by providing a system and method for safety-critical applications. Further details and features of the present invention, its nature and various advantages will become more apparent from the following detailed description of the preferred embodiments shown in a drawing, in which:

Fig. 1 presents an example of a system for safety-critical applications;
Fig. 2 presents a diagram of voting;
Fig. 3 presents a diagram of a watchdog action;
Fig. 4 presents an example of a system for over-current protection, wherein the system for safety-critical applications has been implemented; and
Fig. 5 shows a method according to the present invention.

NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

DETAILED DESCRIPTION

The system and method presented herein are aimed at duplicating hardware for calculations and running detection algorithms on multiple hardware platforms. Operating principles of the hardware platform may differ and the implementation methods of the detection algorithms may differ from platform to platform.

Application of different hardware and software approaches increases a probability of detection of events. An important aspect of the system presented herein is that one of the hardware platforms is a coprocessor implemented as a module within an FPGA fabric.

The system focuses on a method of multiple implementation and execution of a critical algorithm and comparing results obtained from different execution paths, where at least one implementation is performed in a reconfigured digital circuit.

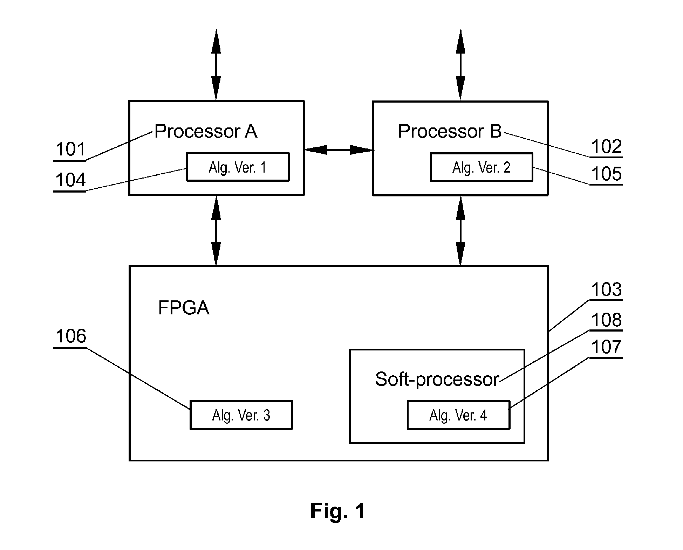

Fig. 1 presents an example of a system for safety-critical applications. The system comprises two hardware processors (101) and (102), and a reconfigurable FPGA circuit (103). In other embodiments there is one or more than two hardware processors (101). These circuits are configured to read input data and to output processing results.

An algorithm (104, 105, 107) is executed by the two hardware processors (101) and (102) and by a soft-processor (108) implemented as a part of the FPGA unit. A soft processor (also called a softcore microprocessor or a soft microprocessor) is a microprocessor core that can be implemented using logic synthesis. It can be implemented via different semiconductor devices containing programmable logic.

The details of the algorithm are not essential for the operation of the present invention. It may be any method for detecting critical events, such as for example, overload, crossing of a threshold, lack of reaction for a predefined time, abnormal result of operation of a machine, etc.

Also, the algorithm is implemented (once or multiple times) as a hardware module (106) as a direct connection of logical resources of the reconfigurable fabric. The module (106) forms a kind of a hardware coprocessor unit, dedicated to calculate the given algorithm.

Therefore, the algorithm (104, 105, 106 and 107) is the same in terms of logic, but may differ in terms of implementation i.e. software or hardware.

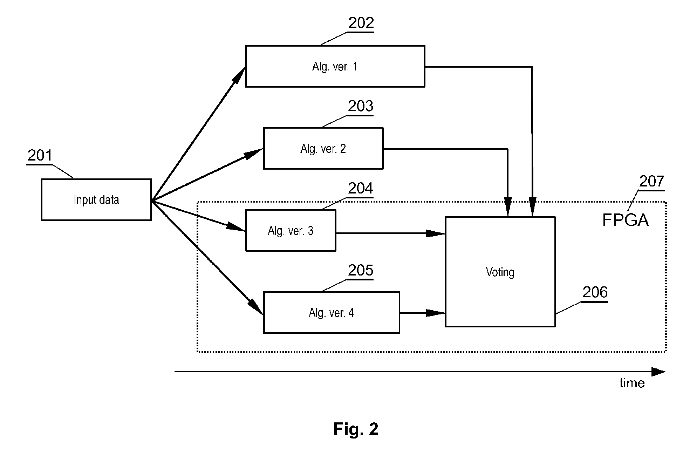

Fig. 2 presents a diagram of voting. All algorithms (202, 203, 204 and 205) process the same input data (201). The beginning time of data processing and associated termination time depend on a platform in which the algorithm is executed.

The algorithm implemented as the hardware coprocessor (204) (106 in Fig. 1) in the reconfigurable FPGA circuit (207) usually starts first and has the highest processing speed. Unlike the processor systems, where algorithms are processes in instruction-by-instruction manner, the coprocessor (204) processes inputs by the data flow by logical resources. It leads to 10-1000 faster reaction end execution times.

The results from all the algorithms are processed by a voting module (206). The voting module (206) is a part of the reconfigurable unit (207) and may implement different voting strategies: e.g. select the worst case or the most frequent result.

The configuration of the voting module (206) may be updated. For example, according to the voting scheme it may be sufficient that one algorithm detects an even, or that all algorithms detect an event or that a majority of algorithms detects an event. Additionally, the configuration of the voting module (206) may change with a change in the number of platforms, on which the algorithms have been implemented.

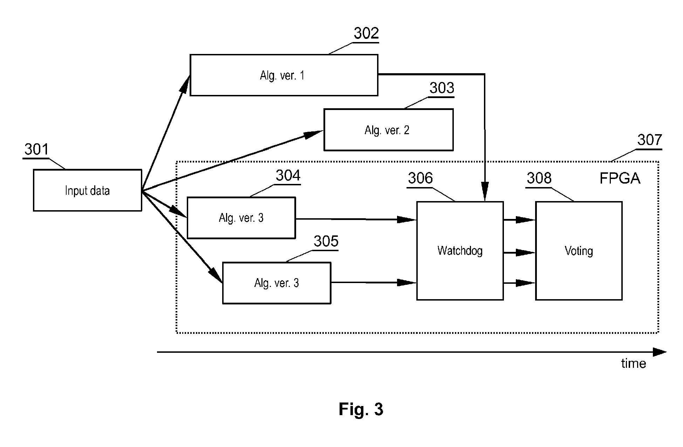

The algorithms (204, 205, 206 and 207) notify the voting module (206) when the processing results are ready. If an algorithm does not terminate the processing till a given time point (deadline (309)) a watchdog module (306) implemented in the FPGA (307) may skip this algorithm, and any of its results, in the voting procedure (308) (results of the (303) algorithm are skipped as shown in Fig.3).

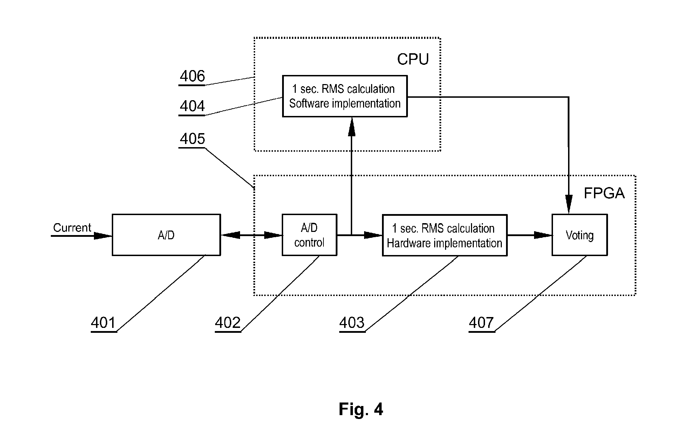

The system may be implemented, for example, as a system for over-current protection, as presented in Fig.4. An analog-to-digital converter (401) measures a current signal. The converter (401) is controlled by a module (402) implemented in an FPGA circuit (405). The module (402) periodically returns the conversion results. The results are used to calculate an RMS (Root mean square) value of the current according to the following formula:

$$RMS = \sqrt{\frac{1}{N} \sum_{i=0}^{N-1} I_i^2}$$

where the *RMS* is the calculated RMS value and $I_i$ is a series of N current samples acquired during a given time period. The RMS calculation algorithm is implemented twice: as a first implementation by a processor system (406) in a software (404) and as the second implementation in an FPGA circuit (405) as a hardware module (403) (RMS calculation coprocessor).

A voting module (407), implemented within the FPGA circuit (405), is configured to read the RMS values from the processor system (404) and from the hardware coprocessor (403) and trigger an over-current protection action when a given threshold has been crossed.

The voting algorithm can operate according to different rules, for example it can trigger an action only when both algorithms detect exceeding of the RMS value above a given threshold level or may trigger an action if only one of the algorithms reports an excessive RMS value.

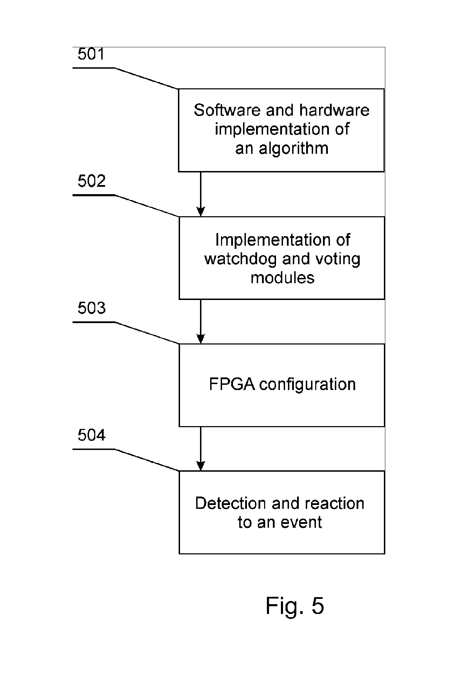

Fig. 5 shows a method according to the present invention. At step (501) there is provided a fixed-hardware processor implementing a safety critical algorithm as well as a reconfigurable circuit suitable for implementing the same algorithm. As shown in Fig. 1 the reconfigurable circuit (103) may implement the algoritm in hardware (106) or soft-processor manner (107). Thus a software implementation of the same algorithm is provided such that it may be run as a soft-processor manner in the reconfigurable circuit (103).

At step (502) there is provided and configured the voting module (206) configured to implement at least one voting strategy taking into account results obtained from executing the fixed-hardware implementation of the algorithm as well as from executing the soft-processor implementation of the algorithm. In other words, based on the voting strategy, the voting module (206) is configured to signal normal or abnormal event related to the input data.

The voting module cooperates with a watchdog identifying runs of the algorithm that exceed predefined timing parameters. Output the watchdog is provided to the voting module (206).

Subsequently, at step (503), the reconfigurable circuit (103) is configured with the software implementation in order to create the soft-processor.

Next at step (504), there is monitored at least one input signal for the purpose of detection of an event by said fixed-hardware algorithm and said soft-processor algorithm. When detected such event is processed in order to signal appropriate reaction to the event based on the output of the voting module (206).

The reconfigurable modules may be realized using suitable, custom made or configurable FPGA or ASIC (Application Specific Integrated Circuit) circuits.

A unique feature of the solution is that at least one implementation of a safety-critical algorithm is realised in a reconfigurable circuit as a direct connection of logical resources (memories, gates, look-up tables, registers). It means a direct hardware implementation of an algorithm leading to creation of a kind of hardware coprocessor. The hardware implementation of some algorithms leads to much faster calculation time, even hundreds or thousands time faster comparing to the adequate software implementation.

The presented system and method enable, for example, high speed, reliable and adaptive detection of over-current condition. Therefore, the invention provides a useful, concrete and tangible result.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for executing safety-critical applications, the method being **characterized in that** it comprises the steps of:

   - providing (501) a fixed-hardware processor (101) implementing a safety critical algorithm as well as a reconfigurable circuit (103) suitable for implementing the same algorithm;
   - providing a software implementation of the same algorithm such that it may be run as a soft-processor manner in the reconfigurable circuit (103);
   - providing (502) a voting module (206) configured to implement at least one voting strategy taking into account results obtained from executing the fixed-hardware implementation of the algorithm as well as from executing the soft-processor implementation of the algorithm;
   - providing a watchdog identifying runs of the algorithm that exceed predefined timing parameters wherein output of the watchdog is provided to the voting module (206);
   - configuring the reconfigurable circuit (103) with the software implementation in order to create the soft-processor;
   - monitoring (504) at least one input signal for the purpose of detection of an event by said fixed-hardware algorithm and said soft-processor algorithm whereas when detected, such event is processed in order to signal appropriate reaction to the event based on the output of the voting module (206).

2. The method according to claim 1 **characterized in that** more than one fixed-hardware processors (101) implementing a safety critical algorithm operate in parallel and are monitored by the watchdog and the voting module (206).

3. The method according to claim 2 **characterized in**

that the configuration of the voting module (206) may be updated in case the number of fixed-hardware processors (101), operating in parallel, changes.

4. The method according to claim 1 **characterized in that** the reconfigurable circuit (103) is a field-programmable gate array (FPGA) or an application specific integrated circuit (ASIC).

5. A system for executing safety-critical applications, the system being **characterized in that** it comprises:

   - at least one hardware processor (101) and at least one reconfigurable circuit (103) configured to read input data and to output processing results;
   - wherein the at least one hardware processor (101) implements a safety critical algorithm;
   - wherein the at least one reconfigurable circuit (103) implements the same safety critical algorithm as a soft-processor;
   - a voting module (206) configured to implement at least one voting strategy taking into account results obtained from executing the algorithm by the at least one hardware processor (101) as well as from executing the soft-processor implementation of the algorithm;
   - wherein, based on the voting strategy, the voting module (206) is configured to signal normal or abnormal event related to the input data;
   - providing a watchdog identifying runs of the algorithm that exceed predefined timing parameters wherein output of the watchdog is provided to the voting module (206).

**Fig. 1**

**Fig. 2**

302

Alg. ver. 1

303

Alg. ver. 2

307

301

Input data

304 FPGA

Alg. ver. 3

306 308

305 Watchdog Voting

Alg. ver. 3

time

**Fig. 3**

**Fig. 4**

501

Software and hardware
implementation of
an algorithm

502

Implementation of
watchdog and voting
modules

503

FPGA configuration

504

Detection and reaction
to an event

Fig. 5

Europäisches
Patentamt

European
Patent Office

Office européen
des brevets

# EUROPEAN SEARCH REPORT

Application Number

EP 15 46 1546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 877 627 B1 (FREYDEL LEV [US]) 25 January 2011 (2011-01-25) * abstract; figure 5 * * column 8, line 6 - line 45 * * column 10, line 41 - column 11, line 34 * * column 27, line 52 - column 28, line 40 * ----- | 1-5 | INV. G06F11/18 |
| X | DE 10 2005 037241 A1 (BOSCH GMBH ROBERT [DE]) 15 February 2007 (2007-02-15) * the whole document * ----- | 1-5 | |
| A | CN 102 135 928 A (UNIV WUHAN) 27 July 2011 (2011-07-27) * the whole document * ----- | 1-5 | |
| A | THOMPSON H A: "TRANSPUTER-BASED FAULT TOLERANCE IN SAFETY-CRITICAL SYSTEMS", MICROPROCESSORS AND MICROSYSTEMS, IPC BUSINESS PRESS LTD. LONDON, GB, vol. 15, no. 5, 1 June 1991 (1991-06-01), pages 243-248, XP000228729, ISSN: 0141-9331, DOI: 10.1016/0141-9331(91)90065-N * the whole document * ----- | 1-5 | TECHNICAL FIELDS SEARCHED (IPC) G06F |
| A | RAZAVI H M: "SELF-PURGING REDUNDANCY WITH AUTOMATIC THRESHOLD ADJUSTMENT", IEE PROCEEDINGS B. ELECTRICAL POWER APPLICATIONS, 1271980 1, vol. 140, no. 4 PART B, 1 August 1993 (1993-08-01), pages 233-236, XP000385811, * the whole document * ----- | 3 | |

The present search report has been drawn up for all claims

| Place of search | Date of completion of the search | Examiner |
|---|---|---|
| Munich | 18 January 2016 | Leuridan, Koen |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.......................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 46 1546

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2016

| Patent document cited in search report | Publication date | Patent family member(s) | Publication date |
|---|---|---|---|
| US 7877627 B1 | 25-01-2011 | NONE | |
| DE 102005037241 A1 | 15-02-2007 | NONE | |
| CN 102135928 A | 27-07-2011 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012116654 A

- US 5031180 A